# EUROPÄISCHE PATENTSCHRIFT

(11) **EP 0 785 378 B1**
(45) Veröffentlichungstag und Bekanntmachung des Hinweises auf die Patenterteilung: **10.05.2000**
(21) Anmeldenummer: 97100480.9
(22) Anmeldetag: 15.01.1997
(51) Int. Cl.: F16H 57/04, F16H 63/32

(54) **Schaltgabel für ein Wechselgetriebe**
Shift fork for a gearbox
Fourchette pour une boîte de vitesses

(30) Priorität: 20.01.1996 DE 19602041
(43) Veröffentlichungstag der Anmeldung: 23.07.1997
(73) Patentinhaber: Ford Global Technologies, Inc., Dearborn, Michigan 48126 (US)
(72) Erfinder: Fritzsche, Ralf, Dr., 50667 Koeln (DE); Groth, Klaus, 51467 Bergisch Gladbach (DE); Diehl, Axel, 41352 Korschenbroich (DE)
(74) Vertreter: Messulam, Alec Moses

(56) Entgegenhaltungen:
- EP-A- 0 059 396
- EP-A- 0 513 840
- DE-A- 2 510 657
- PATENT ABSTRACTS OF JAPAN vol. 004, no. 120 (M-028), 26. August 1980 -& JP 55 076256 A (FUJI HEAVY IND LTD), 9. Juni 1980

## Beschreibung

Die Erfindung bezieht sich auf eine Schaltgabel in einem Wechselgetriebe mit Synchronisiereinheit, der im Oberbegriff des Patentanspruches 1 erläuterten Art.

Aus der EP 0 059 396 A2 ist eine Schaltgabel in einem Wechselgetriebe mit Synchronisiereinheit bekannt, die einen Teil einer Schaltvorrichtung des Getriebes bildet und im wesentlichen aus einer auf einer Schaltstange verschiebbaren Schaltgabelnabe, einem mit einem Schaltfinger zusammenwirkenden Schaltarm und der eigentlichen, mit der Schiebemuffe zusammenwirkenden Schaltgabel besteht und wobei an der Schaltgabel Einrichtungen zum gezielten Zuleiten von Spritzöl vorgesehen sind.

Bei dieser bekannten Schaltgabel in einem Wechselgetriebe sorgen die Einrichtungen zum gezielten Zuleiten von Spritzöl nur für eine bessere Schmierung der mit der Schiebemuffe zusammenwirkenden Gleitflächen der Schaltgabel.

Aus der EP 0 513 840 A1 ist eine Schaltgabel in einem Wechselgetriebe mit Synchronisiereinheit bekannt, die an der eigentlichen, mit der Schiebemuffe zusammenwirkenden Schaltgabel mit seitlichen, am Umfang der Schiebemuffe vorbeistreichenden Ölabstreifblechen versehen ist, die das aufgefangene Schmieröl zur Verbesserung der Schmierung der Synchronisiereinheit abschöpfen und weiterleiten.

Die bekannte Schaltgabel in einem Wechselgetriebe mit den Ölabstreifblechen kann nur eine Verbesserung der Schmierung bewirken, wenn zumindest ein unterer Teil der Schiebemuffe in normalerweise im Getriebe vorhandenen Schmieröl eintaucht und dieses durch Drehung hochfördert.

Die vorliegende Erfindung geht von einem Problem aus, das in einer Mangelschmierung einer Synchronisiereinheit eines Vorwärtsganges liegt, die oberhalb des Ölspiegels des Getriebes liegt und die bei hoher Beanspruchung zur Überhitzung der Synchronringanordnung und damit ggf. zum Versagen neigen kann.

Durch Untersuchungen wurde festgestellt, daß sich Situationen insbesondere im Leerlauf des Wechselgetriebes ergibt, wenn es zu einer sogenannten Ansynchronisation kommt, die z.B. dadurch hervorgerufen wird, daß der Fahrer im Leerlauf seine Hand auf dem Schalthebel ruhen läßt.

Die Aufgabe der Erfindung ist es, dieses Problem mit einfachen Mitteln und auf Dauer zu beseitigen.

Gemäß der Erfindung wird dieses Problem gelöst, indem eine Schaltgabel in einem Wechselgetriebe mit Synchronisiereinheit, der im Oberbegriff des Patentanspruches 1 erläuterten Art die im Kennzeichenteil des Patentanspruches 1 aufgezeigten Merkmale aufweist.

Dadurch, daß die Einrichtung zum Zuleiten von Spritzöl aus einem sich in Längsachse der Schaltgabel bis in den Bereich eines in Schmieröl eintauchenden Zahnrades erstreckenden Prallbleches mit einer sich nach unten eingerollt anschließenden Sammelrinne besteht und in der Sammelrinne ein gerichteter Ablauf für das Schmieröl derart angeordnet ist, daß es während der Ansynchronisierung eines Vorwärtsganges die betreffende Synchronisiereinheit mit zusätzlichem Schmieröl versorgt, wird auch bei länger andauernder Ansynchronisation die Schmierung der betroffenen Synchronisiereinheit derart verbessert, daß keine Mangelschmierung mehr auftritt.

Die Erfindung wird anhand eines in den beigefügten Zeichnungen gezeigten Ausführungsbeispieles näher erläutert. Es zeigt:
- Fig. 1: einen vertikalen Teilschnitt durch eine Schaltvorrichtung, an der die erfindungsgemäße Schaltgabel vorteilhaft angewendet werden kann;
- Fig. 2: einen Teilschnitt entlang der Linie II-II in Fig. 1, aus der die zusammenwirkenden Zahnräder, die problembehaftete Synchronisiereinheit und die erfindungsgemäße Schaltgabel ersichtlich ist.
- Fig. 3: eine vergrößerte Seitenansicht einer Schaltgabel gemäß der Erfindung und
- Fig. 4: eine Draufsicht auf die Schaltgabel in Fig. 3.

In den Figuren ist in einem Getriebegehäuse 1 im wesentlichen eine Eingangswelle 2 und eine Vorgelege- oder Ausgangswelle 3 angeordnet und in an sich bekannter, nicht näher erläuterten Art und Weise drehbar gelagert.

Der Aufbau des Wechselgetriebes ist von herkömmlicher Art und wird daher hier nicht im einzelnen erläutert.

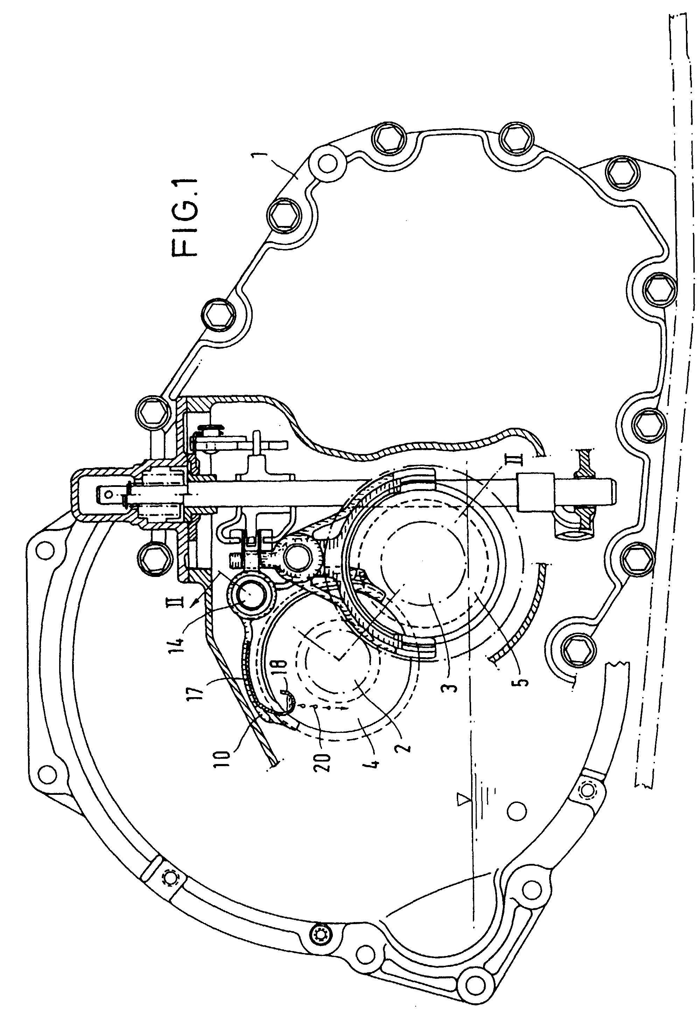

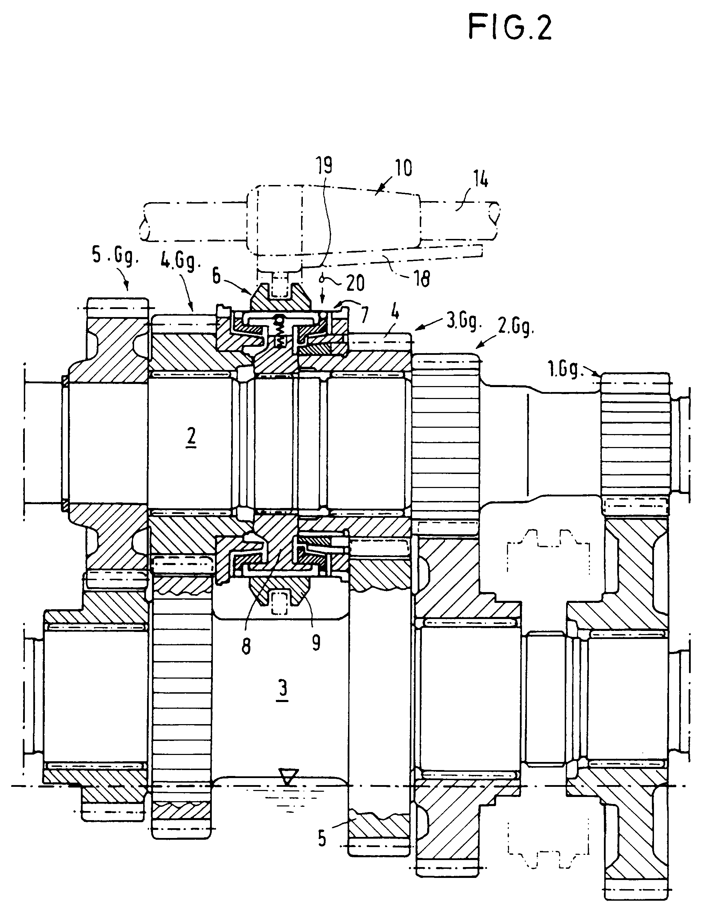

Zur Erläuterung der Erfindung werden in den Fig. 1 und 2 lediglich diejenigen Bauteile mit Bezugszeichen versehen, die für die Erfindung wesentlich sind.

Auf der Eingangswelle 2 ist z.B.: Ein Losrad 4 frei laufend angeordnet und steht in kämmendem Eingriff mit einem Festrad 5 auf der Vorgelegewelle 3. Das Festrad 5 taucht hierzu in den Schmierölspiegel ein und wirft Spritzöl nach oben.

Auf der Eingangswelle 2 ist eine Synchronisiereinheit 6 angeordnet, die über eine Synchronringanordnung 7 eine treibende Verbindung vom Losrad 4 zur Eingangswelle 2 herstellen kann.

Die Synchronisiereinrichtung 6 besteht hierbei in bekannter Weise aus einer auf der Eingangswelle 2 festen Synchronnabe 8, auf der eine Schiebemuffe 9 unverdrehbar aber axial verschiebbar angeordnet ist und einer Synchronringanordnung 7.

Die Synchronringanordnung 7 kann in bekannter Weise als eine einfache oder doppelte Synchronisierung von bekannter Bauart ausgebildet sein.

Mit der Schiebemuffe 9 wirkt eine an sich bekannte Schaltgabel 10 zusammen, die in normaler Weise eine Schaltgabelnabe 11, einen Schaltarm 12 und die eigentliche Schaltgabel 13 aufweist.

Die Schaltgabel 10 ist mit ihrer Schaltgabelnabe 11 auf einer üblichen Schaltstange 14 axial verschiebbar, um durch Verschieben der Schiebemuffe 9 und der Synchronisierringanordnung 7 die entsprechenden Gangstufen zu schalten.

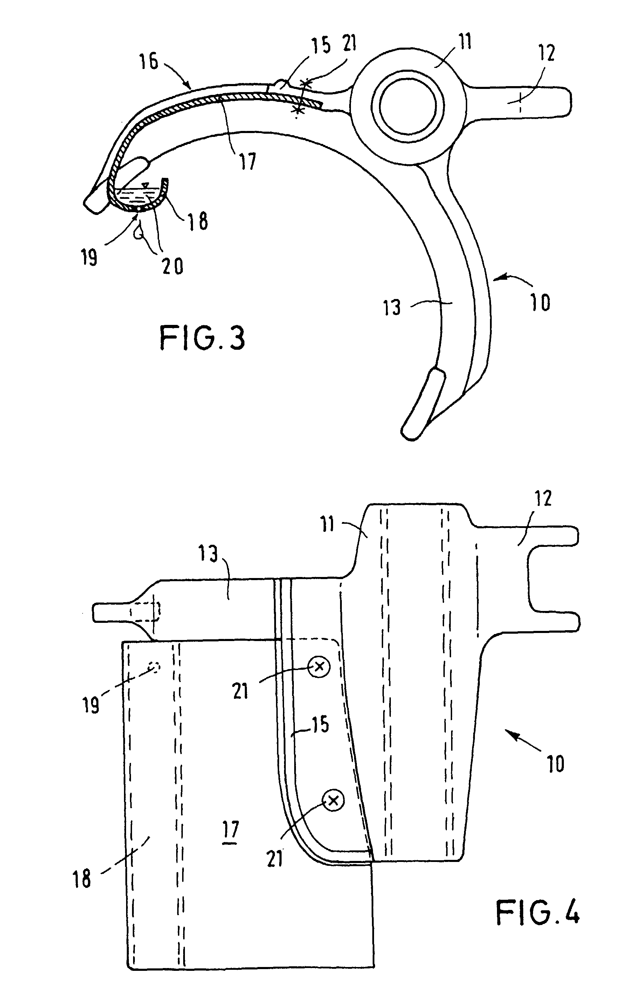

In den Figuren 3 und 4 wird die erfindungsgemäße Ausbildung der Schaltgabel 10 näher erläutert.

An der Schaltgabelnabe 11, die schon aus Schmierölsammelgründen für die Schaltgabelschuhe mit einer sich axial erstrekkenden Rippe 15 versehen ist, wird eine Einrichtung 16 zum Zuleiten von Spritzöl angebracht, die aus einem Spritzöl auffangenden Prallblech 17, einer das Schmieröl weiterleitenden Sammelrinne 18 und einem Ablauf 19 für das Schmieröl 20 besteht.

Der Ablauf 19 ist hierbei so angeordnet, daß bei einem Ansynchronisieren des Vorwärtsganges das Schmieröl 20 unmittelbar dort abtropft, wo es für eine zusätzliche Schmierung der Synchronisiereinheit 6 sorgt.

In den Figuren 3 und 4 ist eine Ausführungsform für die Einrichtung zum Zuleiten von Schmieröl gezeigt, die auf die ursprüngliche Form der Schaltgabel 10 aufbaut und ein nachträgliches Anbringen des Prallbleches 17 mittels Schrauben 21 ermöglicht.

Für eine Lösung des Problems in der Großserie bieten sich jedoch kostengünstigere Lösungen an, die darin bestehen, daß eine solche Einrichtung zum Zuleiten von Schmieröl als ein aufklipsbares Kunststoffbauteil ausgebildet wird oder aber unmittelbar bei der Gestaltung der Schaltgabel als Sinterbauteil oder Kokillengußbauteil mitberücksichtigt wird.

Durch die erfindungsgemäße Schaltgabel kann daher das eingangs erwähnte Problem vollständig gelöst werden. Darüber hinaus ergibt die erfindungsgemäße Schaltgabel noch den weiteren Vorteil, daß bei eingerücktem Vorwärtsgang der Ablauf an Schmieröl für eine zusätzliche Schmierung der Laufverzahnungen des Vorwärtsganges sorgt.

## Patentansprüche

1. Schaltgabel in einem Wechselgetriebe mit Synchronisiereinheit, die einen Teil einer Schaltvorrichtung eines Getriebes bildet und im wesentlichen aus einer auf einer Schaltstange (14) verschiebbaren Schaltgabelnabe (11), einem mit einem Schaltfinger zusammenwirkenden Schaltarm (12) und der eigentlichen, mit einer Schiebemuffe (9) zusammenwirkenden Schaltgabel (13 besteht und wobei an der Schaltgabel (10) Einrichtungen (16) zum gezielten Zuleiten von Spritzöl vorgesehen sind,
**dadurch gekennzeichnet**, daß
- eine Einrichtung (16) zum Zuleiten von Spritzöl aus einem sich in Längsachse der Schaltgabel (10) bis in den Bereich eines im Schmieröl eintauchenden Zahnrades erstreckenden Prallbleches (17) mit einer sich nach unten eingerollt anschließenden Sammelrinne (18) besteht und
- in der Sammelrinne (18) ein gerichteter Ablauf (19) für das Schmieröl (20), derart angeordnet ist, daß bei ansynchronisierter Synchronisiereinheit (6) die betroffene Synchronringanordnung (7) mit zusätzlichem Schmieröl versorgt wird.

2. Schaltgabel in einem Wechselgetriebe nach Anspruch 1,
**dadurch gekennzeichnet**, daß
- die Einrichtung (16) zum Zuleiten von Spritzöl (20) aus einem mit der Schaltgabel (10) mittels Schrauben (21) verbundenen Blechbauteil (17) gebildet ist.

3. Schaltgabel in einem Wechselgetriebe nach Anspruch 1,
**dadurch gekennzeichnet,** daß
- die Einrichtung zum Zuleiten von Spritzöl (16) durch ein auf die Schaltgabel (10) aufgeclipstes Kunststoffbauteil gebildet ist.

4. Schaltgabel in einem Wechselgetriebe nach Anspruch 1,
**dadurch gekennzeichnet**, daß
- die Einrichtung (16) zum Zuleiten von Spritzöl (20) in einem Stück mit der als z.B. Sinterbauteile oder Kokillengußteil ausgebildeten Schaltgabel (10) geformt ist.

## Claims

1. Gearshift fork in a gear change box with synchronising unit which forms part of an actuating device of a gear unit and essentially consists of a gearshift fork hub (11) which can be displaced along a sliding selector shaft 914), a shift arm (12) which collaborates with a shift finger and an actual gearshift fork (13) which collaborates with a sliding sleeve (9), and in which devices (16) are provided on the gearshift fork (10) for the specific input of splash oil, characterised in that: a device (16) for inputting splash oil consists of a baffle plate (17) which extends along the longitudinal axis of the gearshift fork (10) into the area of a gear wheel which dips into the lubricating oil, with a connected collecting channel (18) which curls in a downward direction and, a directed outlet (19) for the lubricating oil (20) is positioned in such a manner in the collecting channel (18) that, with a synchronous synchronising unit (6), the affected synchronising drum arrangement (7) is supplied with additional lubricating oil.

2. Gearshift fork in a gear change box according to claim 1, characterised in that, the device (16) for inputting splash oil (20) is formed from a plate component (17) which is connected to the gearshift fork (10) by means of screws (21).

3. Gearshift fork in a gear change box according to claim 1, characterised in that the device for inputting splash oil (16) is formed by a plastic component clipped on to the gearshift fork (10).

4. Gearshift fork in a gear change box according to claim 1, characterised in that the device (16) for inputting splash oil (20) is formed in one piece with the gearshift fork (10), configured e.g. sintered components or chill cast component.

## Revendications

1. Fourchette de sélection dans une boîte de vitesses à synchroniseur, qui fait partie d'un dispositif de changement de vitesses d'une boîte de vitesses et qui est constituée pour l'essentiel d'un moyeu (11) de fourchette de sélection pouvant coulisser sur une tringle de changement de vitesses (14), d'un bras de sélection (12) coopérant avec un doigt de commande et de la fourchette de sélection (13) proprement dite, coopérant avec un manchon coulissant (9), des dispositifs (16) étant prévus sur la fourchette de sélection (10) pour l'apport dirigé d'huile projetée,
**caractérisée** en ce que
- un dispositif (16) pour l'apport d'huile projetée est constitué d'une tôle déflectrice (17), qui s'étend dans l'axe longitudinal de la fourchette de sélection (10) jusque dans la région d'une roue dentée immergée dans l'huile de lubrification et qui est pourvue d'une rigole collectrice (18) se raccordant en étant enroulée vers le bas, et
- une évacuation orientée (19) pour l'huile de lubrification (20) est disposée dans la rigole collectrice (18) de telle sorte que, lors d'une tentative de synchronisation du synchroniseur (6), l'ensemble concerné de bague synchro (7) est alimenté en huile de lubrification supplémentaire.

2. Fourchette de sélection dans une boîte de vitesses selon la revendication 1, **caractérisée** en ce que le dispositif (16) pour l'apport d'huile projetée (20) est constitué d'une pièce de tôle (17) assemblée à la fourchette de sélection (10) par des vis (21).

3. Fourchette de sélection dans une boîte de vitesses selon la revendication 1, **caractérisée** en ce que le dispositif (16) pour l'apport d'huile projetée est constitué d'une pièce en matière plastique clipsée sur la fourchette de sélection (10).

4. Fourchette de sélection dans une boîte de vitesses selon la revendication 1, **caractérisée** en ce que le dispositif (16) pour l'apport d'huile projetée (20) est formé d'un seul tenant avec la fourchette de sélection (10), réalisée par exemple sous forme de pièce frittée ou coulée en coquille.
